# FASCICULE DE BREVET EUROPEEN

(11) **EP 1 673 277 B1**
(45) Date de publication et mention de la délivrance du brevet: **16.12.2009**
(21) Numéro de dépôt: 04805746.7
(22) Date de dépôt: 15.10.2004
(51) Int. Cl.: B62K 15/00

(54) **BICYCLETTE PLIABLE ET PROCEDE DE PLIAGE**
KLAPPFAHRRAD UND KLAPPVERFAHREN
FOLDING BICYCLE AND METHOD OF FOLDING

(30) Priorité: 15.10.2003 FR 0350687
(43) Date de publication de la demande: 28.06.2006
(73) Titulaire: Bied Dominique, 76300 Sotteville-les-Rouen (FR)
(72) Inventeur: POURIAS, Christian, F-91430 Vauhallan (FR)
(74) Mandataire: Schmit, Christian Norbert Marie
(86) Numéro de dépôt international: PCT/FR2004/050503
(87) Numéro de publication internationale: WO 2005/035347

(56) Documents cités:
- EP-A- 0 197 163
- WO-A-96/01204
- WO-A-03/029072
- DE-C- 202 044
- US-A- 3 990 717
- US-A- 4 598 923
- PATENT ABSTRACTS OF JAPAN vol. 2002, no. 09, 4 septembre 2002 (2002-09-04) -& JP 2002 145157 A (WING SEKKEI:KK), 22 mai 2002 (2002-05-22)

## Description

L'invention concerne une bicyclette pliable et un procédé de pliage d'une telle bicyclette. Le but de l'invention est d'obtenir une bicyclette ergonomiquement pliable et dépliable. Un autre but de l'invention est de diminuer un encombrement résultant d'une telle bicyclette pliée, et obtenir une bicyclette pliée aux formes les plus carénées possibles et sans agressivité de pièces mécaniques. L'invention concerne le domaine des transports mais pourrait s'appliquer dans d'autres domaines. L'invention peut également être utile lors de transport de la bicyclette dans des transports en communs comme par exemple le train ou le bus.

Une bicyclette comporte une roue avant et une roue arrière reliées à un cadre. Un guidon s'articule sur le cadre pour diriger la roue avant de la bicyclette et un pédalier de roue permet de réaliser un mouvement de rotation à la roue arrière pour faire déplacer la bicyclette le long d'une trajectoire. Le cadre est relié à une selle permettant à un utilisateur de s'asseoir sur la bicyclette.

D'après le document FR 2827829, il est connu une bicyclette qui comporte un cadre poutre formant deux tubes parallèles. Cette bicyclette comporte également un guidon qui est formé par un premier bras et par un deuxième bras. A l'extrémité de chacun de ces bras, s'étend une poignée perpendiculairement au bras correspondant et en direction opposée au cadre poutre. Au cours du pliage de la bicyclette, la roue avant est amenée à s'insérer entre les deux tubes. L'insertion de la roue avant entre les deux tubes présente l'avantage de ne pas augmenter davantage en épaisseur la bicyclette. Cependant, le pliage du guidon peut aboutir à un encombrement de cette bicyclette pliée du fait de la présence des poignées qui peuvent se frotter contre les jambes de l'utilisateur et freiner ce même utilisateur au cours de ses déplacements.

D'après le document EP-B1-0 263 554, il est connu une bicyclette pliable comportant un cadre. Ce cadre comporte un logement destiné à revoir une partie de la roue avant. Cette bicyclette comporte également un guidon avec une première branche et une deuxième branche. A l'extrémité de chacune de ces branches s'étend également une poignée relativement perpendiculairement à chacune des branches. Le pliage de la bicyclette est réalisé en positionnant la roue avant dans le logement formé par le cadre et par le rabattement du guidon en direction du cadre. L'insertion de la roue avant dans le logement présente également l'avantage de ne pas augmenter davantage en épaisseur la bicyclette. Cependant, le pliage du guidon peut également aboutir à un encombrement de la bicyclette pliée du fait de la présence des poignées.

Pour résoudre ce problème, l'invention prévoit de réaliser une bicyclette pliable comportant un cadre creusé d'une première rigole de forme complémentaire à une forme du guidon. On prévoit un guidon comportant une tige de direction et des poignées s'articulant sur cette tige. Ces poignées s'articulent de manière à se rabattre le long de la tige de direction. Ainsi le guidon se loge dans la première rigole avec ses poignées rabattues. La première rigole peut être réalisée tout en prévoyant un espace suffisant pour accueillir en plus de telles poignées.

L'invention prévoit également de réaliser une selle comportant une deuxième rigole pour recouvrir le guidon lors du pliage de la bicyclette. Ainsi, le guidon est recouvert d'une part par le cadre et d'autre part par la selle. Le cadre ainsi que la selle forment un étui de protection du guidon.

L'invention prévoit enfin de réaliser au moins une troisième rigole de forme complémentaire à une forme d'une partie d'au moins une des deux roues. La roue arrière se loge dans une rigole formée par le cadre après rotation de cette même roue arrière autour d'un axe horizontal La roue avant se loge dans une autre rigole ou bien dans une même rigole que celle accueillant la roue arrière après rotation autour d'un autre axe horizontal. Les deux roues sont disposées après leur rotation de telle manière que la roue avant se superpose à la roue arrière parallèlement à un plan formé par la bicyclette. Pour ce faire, l'invention prévoit des moyens pour réaliser une translation horizontale ou translation perpendiculaire de la roue avant par rapport au cadre et par rapport au plan formé par la bicyclette de manière à permettre à à roue avant de se placer en regard de la roue arrière parallèlement au plan formé par la bicyclette et de telle manière à permettre à la roue arrière de venir se loger dans la rigole.

Le document US 4,598,923, qui reflète l'état de la technique le plus proche, décrit une bicyclette pliable comportant un mécanisme de rabattement de la roue avant autour d'un axe de pliage, ledit axe de pliage étant monté sur la tige de direction.

Le document US 4,598,923 décrit également un procédé de pliage de cette bicyclette dans lequel le rabattement de la roue avant s'effectue en poussant la roue avant en direction de la roue arrière, un tel rabattement de la roue avant faisant intervenir le mécanisme précédemment mentionné de rabattement de la roue avant.

L'invention permet avantageusement d'obtenir une bicyclette qui se plie de telle manière que les différents éléments formant la bicyclette s'imbriquent les uns dans les autres. On entend par éléments formant la bicyclette le cadre, la roue avant, la roue arrière, la selle, le guidon et le pédalier de roue.

Une telle bicyclette selon l'invention permet avantageusement de diminuer un encombrement résultant du pliage de la bicyclette.

L'invention présente également l'avantage de pouvoir disposer plusieurs bicyclette pliées selon l'invention tout en optimisant un espace délimité par un coffre standard d'une voiture, d'un bus, d'un train, ou d'une consigne.

L'invention a donc pour objet une bicyclette pliable comportant une roue avant, une roue arrière, un guidon pour diriger la roue avant, un cadre, une selle, et un mécanisme pour qu'un plan de la roue avant soit parallèle à un plan de la roue arrière et pour que la roue avant soit située en regard de la roue arrière au moment du pliage, le guidon étant rabattable autour d'un premier axe de pliage monté sur une tige de direction du guidon, la bicyclette comportant également un mécanisme de rabattement de la roue avant autour d'un deuxième axe de pliage monté également sur la tige de direction, caractérisée en ce qu'elle comporte un mécanisme de translation de la roue avant perpendiculairement à un plan de la bicyclette, le mécanisme de translation étant monté sur ce deuxième axe de pliage.

L'invention a également pour objet un procédé de pliage d'une bicyclette, comportant les étapes suivantes - on rabat un guidon dans une première rigole formée dans un cadre, par rotation du guidon autour d'un premier axe de pliage monté sur une tige de direction, - on rabat une selle contre le cadre pour recouvrir le guidon par une deuxième rigole formée par la selle, par rotation de la selle autour d'un deuxième axe de pliage, - on déplace une roue avant par translation perpendiculaire à un plan formé par la bicyclette, le long d'un troisième axe de pliage lui aussi monté sur la tige de direction, puis on rabat la roue avant en direction d'une roue arrière par rotation de la roue avant autour de ce troisième axe de pliage, et - on rabat la roue arrière en direction de la roue avant par rotation de la roue arrière autour d'un quatrième axe de pliage.

L'invention sera mieux comprise à la lecture de la description qui suit et à l'examen des figures qui l'accompagne. Celles-ci ne sont données qu'à titre indicatif et nullement limitatif de l'invention. Les figures montrent :
- Figure 1 : une bicyclette pliable selon l'invention ;
- Figure 2 : une bicyclette pliable selon une première étape de pliage;
- Figure 3 : une bicyclette pliable selon une deuxième étape de pliage;
- Figure 4 : une bicyclette pliable selon une troisième étape de pliage;
- Figure 5 : une coupe transversale d'une bicyclette pliée selon une variante de l'invention, et
- Figure 6 : une coupe transversale d'une bicyclette pliée selon l'invention.

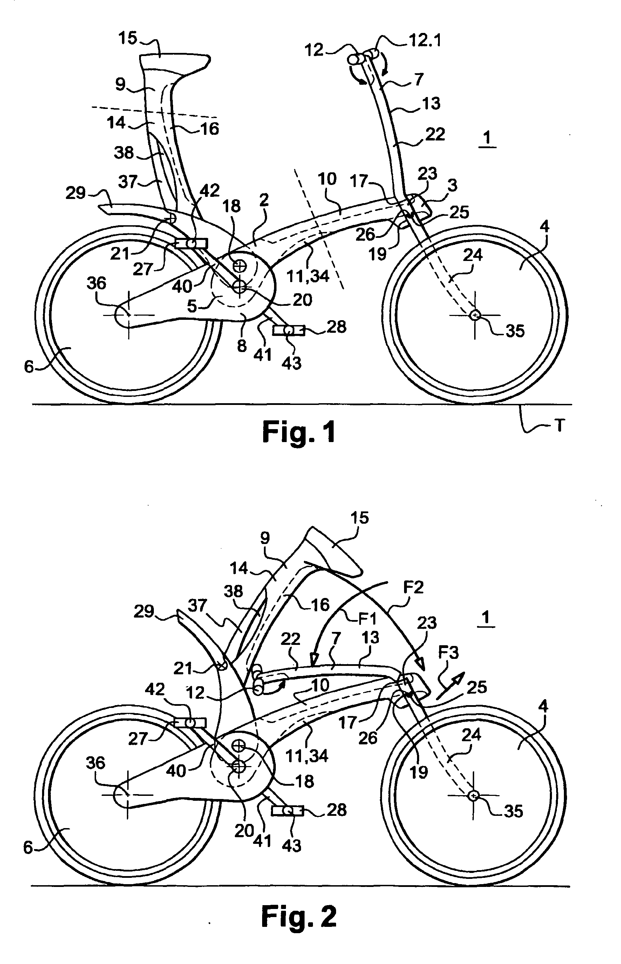

La figure 1 représente une bicyclette pliable 1, selon l'invention. Plus particulièrement, cette bicyclette 1 comporte un cadre 2 portant à une extrémité avant 3 une roue avant 4 et à une extrémité arrière 5 une roue arrière 6. La roue avant 4 et la roue arrière 6 tournent autour d'un axe de rotation avant 35 et autour d'un axe de rotation arrière 36 respectivement. La roue avant 4 et la roue arrière 6 peuvent être des roues de 18 pouces ou de 20 pouces. La roue avant 4 est reliée à un guidon articulé 7 par l'intermédiaire d'une monofourche 24. La roue arrière 6 est reliée à un pédalier de roue 8.

La roue arrière 6 peut être reliée au pédalier de roue 8 par l'intermédiaire d'une transmission à courroie, à chaîne ou à cardan. Cette transmission peut être carénée de manière à la protéger et de manière rendre propre le pliage de la bicyclette sans que l'utilisateur ne risque de se salir les mains ou ne détériore la transmission au cours du pliage de la bicyclette. L'extrémité arrière 5 du cadre comporte également une selle 9 permettant à un utilisateur de la bicyclette de s'asseoir tout en pédalant sur le pédalier de roue et tout en dirigeant la bicyclette à l'aide du guidon le long d'une trajectoire

Selon l'invention, le cadre 2 comporte une première rigole 10. Cette première rigole 20 est représentée en traits pointillés figure 1. La première rigole 10 comporte une forme allongée complémentaire à une forme du guidon 7. Le guidon 7 est destiné à se loger dans cette première rigole 10 lors du pliage de la bicyclette.

Le guidon 7 comporte une première poignée 12, une deuxième poignée 12.1 et une tige de direction 13. La première poignée et la deuxième poignée s'étendent de part et d'autre de la tige de direction. La tige de direction relie les poignées à la roue avant 4. Pour diminuer un encombrement de la bicyclette une fois pliée, la première poignée et la deuxième poignée peuvent s'articuler sur la tige de direction 13 pour se rabattre le long de la tige de direction. Ainsi, la première rigole 10 peut comporter aussi une forme permettant d'accueillir de telles poignées rabattues le long de la tige de direction.

La selle 9 comporte une tige de selle 14 et un siège 15. Selon l'invention également, la selle 9 est creusée d'au moins une deuxième rigole 16 de forme allongée complémentaire à une forme de la tige de direction 13. Cette deuxième rigole 16 est représentée en traits pointillés figure 1. La selle peut également être creusée de telle manière qu'elle comporte une forme complémentaire à une forme de l'extrémité avant de la bicyclette. Cette deuxième rigole s'étend du siège 15 jusque sur le long de la tige de selle 14. La deuxième rigole peut recouvrir partiellement l'extrémité avant 3 du cadre. Cette deuxième rigole et/ou la première rigole peuvent également avoir une forme au moins partiellement complémentaire aux poignées du guidon en position rabattues.

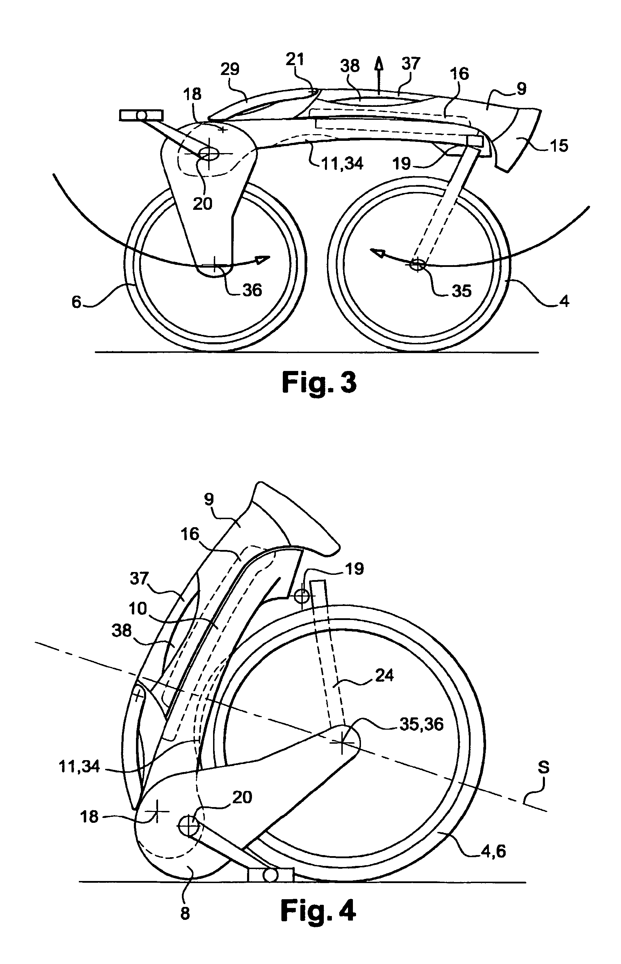

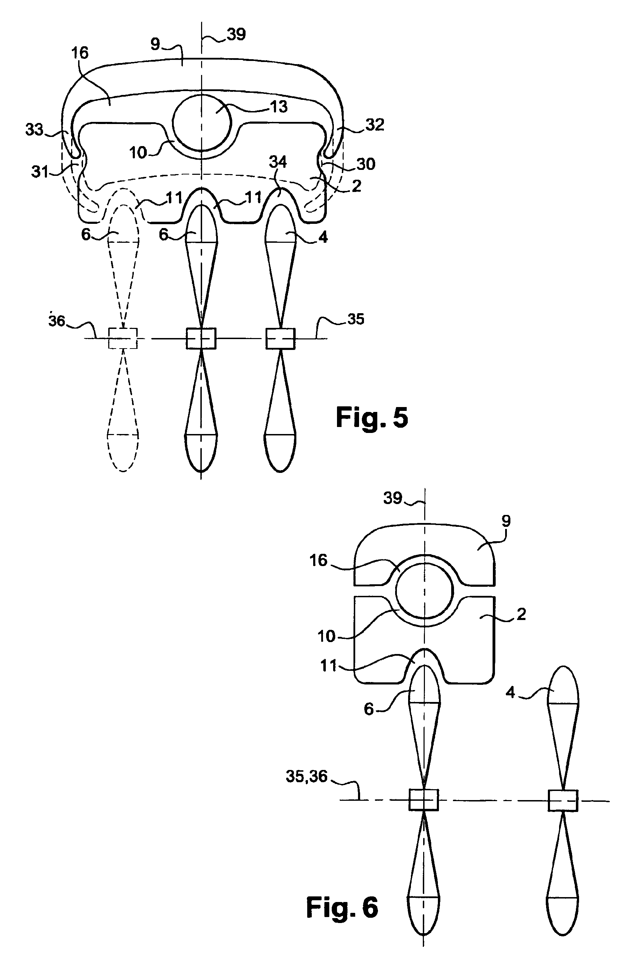

Le cadre 2 comporte également au moins une troisième rigole 11, 34 de forme complémentaire à une forme d'au moins une partie d'une des roues 4 ou 6. La figure 6 représente une coupe transversale passant par un axe S d'une bicyclette pliée selon l'invention représentée figure 4. Cette troisième rigole 11 peut comporter une forme préférentiellement circulaire pour s'adapter à une forme d'une roue. Ou bien cette troisième rigole 11 peut être de forme rectangulaire. Selon l'invention, le cadre comporte une troisième rigole 11 destinée à accueillir au moins une des deux roues 4 ou 6 selon un axe 39 passant le long du plan formé par la bicyclette. Préférentiellement, c'est la roue avant qui se décale par rapport à la roue arrière figure 6. Dans cet exemple préféré, le cadre permet d'accueillir une des deux roues.

La figure 5 représente une coupe transversale passant par un axe S sur une bicyclette pliée selon une variante l'invention représentée figure 4. Selon cette variante, le cadre peut accueillir les deux roues. En effet, le cadre comporte une première troisième rigole 11 et une deuxième troisième rigole 34 destinées respectivement à accueillir la roue arrière 6 et la roue avant 4 lors du pliage de la bicyclette. Ou bien, le cadre comporte une seule troisième rigole de forme permettant d'accueillir les deux roues comme représentées en traits pointillés figure 5. Dans ces deux derniers cas, il peut être nécessaire de prévoir un décalage d'au moins une des deux roues l'une par rapport à l'autre. Dans l'exemple figure 5, la roue avant 4 est décalée parallèlement par rapport à l'axe 39 de la bicyclette. Mais dans ce même exemple figure 5, on a représenté un décalage de la roue avant 4 et de la roue arrière 6 parallèlement à l'axe 39. Chacune des roues se décale dans des directions opposées l'une par rapport à l'autre et par rapport à l'axe 39. La roue arrière 6 décalée est représentée en traits pointillés sur cette même, figure 5.

La réalisation d'un cadre avec une première rigole 10 et au moins une troisième rigole 11, 34 permet avantageusement de diminuer le poids de la bicyclette.

La bicyclette délimite un premier côté et un deuxième côté de part et d'autre d'un plan formé par la bicyclette. Pour diminuer un encombrement de la bicyclette pliée, la monofourche 24 est de préférence située par le premier côté du plan formé par la bicyclette et le pédalier de roue 8 est placé par le deuxième côté de ce même plan.

Pour plier la bicyclette selon l'invention, la bicyclette comporte au moins cinq axes de pliage horizontaux 17, 18, 19, 20, 21. Un premier axe de pliage 17 est situé sur la tige de direction 13 du guidon 7. Ce premier axe de pliage 17 permet au guidon 7 de se rabattre contre le cadre 2 tout en pivotant autour de ce premier axe horizontal 17. De part et d'autre de ce premier axe 17 est délimité une première portion 22 de la tige de direction 13 et une deuxième portion 23 de la tige de direction depuis les poignées 12, 12.1 en direction de la roue avant 4. Plus particulièrement, c'est la première portion 22 de la tige de direction 13 qui se rabat dans la première rigole 10. La deuxième portion est de taille plus petite que la première portion 22 et est reliée à la monofourche 24.

Un deuxième axe de pliage 18 est situé sur la tige de selle 14 et est destiné à permettre à la selle 9 de se rabattre contre le cadre 2 tout en recouvrant partiellement le guidon 7. La selle 9 recouvre partiellement le guidon par l'intermédiaire de la deuxième rigole dont la forme est complémentaire à la forme de la tige de guidon. Ce deuxième axe 18 est situé entre la tige de selle 14 et le cadre 2. Avantageusement, la selle 9 se rabat contre le cadre tout en recouvrant partiellement l'extrémité avant du cadre.

Un troisième axe de pliage 19 est situé sur la tige de direction 13. Ce troisième axe 19 permet à la roue avant 4 de se rabattre en direction de la roue arrière 6 tout en permettant à cette même roue avant 4 de se situer en regard de la roue arrière une fois repliée parallèlement par rapport au plan formé par la bicyclette. Pour ce faire, le cadre 2 peut être réalisé de telle manière qu'il est possible de déplacer la monofourche 24 et la roue avant 4 par translation horizontale en direction du premier côté du plan formé par la bicyclette opposé au deuxième côté de ce même plan de la bicyclette où est situé le pédalier de roue. Cette translation horizontale est représentée par une flèche F3 figure 2. Cette translation horizontale a pour but de décaler parallèlement la monofourche 24 de la deuxième portion 23 de la tige de direction. Pour ce faire, la deuxième portion 23 et la monofourche 24 peuvent comporter respectivement à un premier endroit une protubérance longitudinale 26 de forme arrondie et à un deuxième endroit une rainure 25 également de forme arrondie. La rainure et la protubérance sont destinées à coopérer l'une avec l'autre pour s'emboîter l'une dans l'autre. Dans un exemple préféré, la tige de direction 13 et la monofourche 24 forment une section transversale circulaire. Ainsi, la rainure 25 et la protubérance 26 sont réalisées sur au moins une portion d'un diamètre délimité par ces sections circulaires. La protubérance se prolonge dans le cadre 2 de manière à permettre à la monofourche 24 et donc à la roue avant 4 de pivoter autour de ce troisième axe 19 de pliage après translation.

Un quatrième axe de pliage 20 est situé à un endroit où s'articulent des pédales 27, 28 du pédalier de roue 8 et qui s'étendent de part et d'autre de ce pédalier de roue 8. Ou bien ce quatrième axe de pliage 20 est situé à proximité de l'endroit où s'articulent des pédales 27, 28 du pédalier de roue 8. Ce quatrième axe 20 permet à la roue arrière 6 de se rabattre contre le cadre 2 tout en pivotant autour de ce quatrième axe 20. Après rotation autour de ce quatrième axe 20, la roue arrière 6 se rabat dans la troisième rigole 11 prévue à cet effet.

Un cinquième axe de pliage 21 est situé à un endroit sur la tige de selle 14 entre le siège 15 et le deuxième axe 18. Ce cinquième axe 21 permet à un garde boue 29 de se rabattre également contre la roue arrière 6 une fois la bicyclette pliée. Le rabattement de ce garde boue 29 permet de protéger partiellement la roue arrière 6 une fois la bicyclette pliée. Ce garde boue permet également de protéger cette roue arrière contre d'éventuels chocs ou frottement pouvant se produire lors du transport de la bicyclette pliée par un utilisateur.

La manipulation de ce garde boue peut également être un moyen de vérrouillage/dévérrouillage de la bicyclette pliable. Par exemple, lorsque l'on rabat ce garde boue en direction de la roue arrière par rotation autour de ce cinquième axe, on peut bloquer le dépliage de la selle et du guidon qui restent bloqués en position pliée. Ce blocage spécifique de la selle et du guidon peut être utile lors du pliage de la bicyclette comme il sera explicité plus loin dans la description.

Chaque articulation comprends des moyens de verrouillage (non représentés). Par exemple, l'articulation autour du premier axe 17 peut être bloquée aux moyens de crochets (non représentés) empêchant la tige de direction de pivoter depuis la roue arrière 6 en direction de la roue avant 4 ou inversement lors d'une utilisation de la bicyclette. Ces crochets peuvent être réalisés de manière à relier fixement la première portion 22 à la deuxième portion 23.

Dans un autre exemple, l'articulation autour du deuxième axe 18 peut être bloquée par un encliquetage de la deuxième rigole de la selle sur le cadre, comme représenté figure 5. L'encliquetage de la deuxième rigole sur le cadre verrouille également l'articulation autour du premier axe 17. L'encliquetage de la deuxième rigole sur le cadre sera également explicité plus loin dans la description.

Ou bien ces deux articulations autour des axes 17 et 18 peuvent être bloquées au moyen d'une tige traversant horizontalement ou verticalement la selle et le guidon à un endroit proche du siège de la bicyclette.

Ces moyens de verrouillages peuvent être des crochets, des clips, des doigts, des tiges....

Ces moyens de verrouillages peuvent être des moyens indépendants d'une articulation à une autre. Ou bien, on peut prévoir que ces moyens sont centralisés de manière à commander un verrouillage ou déverrouillage s'effectuant en une seule étape ou en plusieurs étapes.

La première pédale 27 et la deuxième pédale 28 sont reliées au pédalier de roue par un premier bras 40 et par un deuxième bras 41 respectivement. Le premier bras et le deuxième bras s'articulent sur le pédalier de roue autour de l'axe 20. La première pédale et la deuxième pédale s'articulent sur le bras correspondant autour d'un axe 42 et autour d'un axe 43 respectivement. Pour diminuer un encombrement d'une telle bicyclette pliable selon l'invention, on peut également prévoir de rabattre les bras du pédalier de roue le long du plan formé par la bicyclette. Chacun des bras peut être inséré par emboîtement sur une protubérance (non représentée) s'étendant relativement perpendiculairement au pédalier de roue. Cette protubérance comporte un premier cran et un deuxième cran. Le bras est écarté du pédalier de roue pour se désengager du premier cran. Puis on fait pivoter le bras en direction de la monofourche. On rabat le bras contre le pédalier de roue en engageant le bras dans le deuxième cran de la protubérance. Le bras est alors bloqué en position voulue. Par exemple, les bars peuvent être rabattus de manière à être placés l'un en regard de l'autre. Enfin, les pédales sont parallèlement chacune rabattue contre le plan de la bicyclette pour diminuer l'épaisseur de la bicyclette.

On peut également prévoir qu'une des pédales peut être rabattue contre le plan de déplacement de la bicyclette et servir de béquille lorsque la bicyclette est pliée.

L'un des deux bras du pédalier peut pivoter autour de l'axe pédalier 20 de 180° pour amener ce premier bras en vis à vis du second, permettant d'inscrire ces bras dans une surface minimum de la bicyclette pliée. On évite avantageusement un débordement de pièce.

La selle peut être creusée d'un orifice 38 permettant de former une poignée de transport 37. Cette poignée 37 peut également servir à tirer la bicyclette pliée comme on tire une valise roulante. Les roues avant et arrière pourraient tourner sur elle-même pour faciliter le déplacement d'une telle bicyclette pliée. Ou bien, une autre poignée (non représentée) peut être placée à un endroit à proximité de l'extrémité avant ou de l'extrémité arrière du cadre.

La selle et le cadre peuvent être réalisés en matériaux moulables de manière à pouvoir intégrer des fonctions mécaniques des chacune des pièces formant la bicyclette, des articulations, des moyens pour éclairer la bicyclette,.... On entend par articulation, un endroit où se rejoignent par un axe une première pièce et une deuxième pièce.

La bicyclette comporte préférentiellement une dimension non réglable. Par exemple, il peut exister trois tailles standards de bicyclette pliable selon l'invention de manière à limiter le nombre d'articulations sur la bicyclette.

Le procédé de pliage de la bicyclette est réalisé de la manière suivante. Dans une première étape, la première portion 22 de la tige de direction est rabattue contre le cadre 2 tout en pivotant autour du premier axe horizontal 17. Le pivotement autour de ce premier axe 17 est représenté par une flèche F1 figure 2. Le guidon 7 peut se rabattre de telle manière que la tige de direction 13 et les poignées 12 et 12.1 s'emboîtent dans la première rigole 10 prévue à cet effet. Préalablement à ce rabattement, les poignées 12 et 12.1 sont rabattues le long de la tige de direction.

Puis, la tige de selle 9 est rabattue par rotation autour du deuxième axe 18 en direction du cadre 2 de manière à couvrir la tige de direction 13 du guidon et éventuellement les poignées rabattues. Le rabattement de la tige de selle est représentée par une flèche F2 figure 2. Selon une coupe transversale passant par l'axe S de la bicyclette pliée à un endroit où sont placés le guidon 7, la selle 9 et le cadre 2 figure 5, on observe que la tige de direction 13 est placée entre la première rigole 10 et la deuxième rigole 16. On observe que la tige de direction 13 est recouverte d'une part par le cadre 2 et d'autre part par la tige de selle 14. Le cadre 2 et la tige de selle 14 forment un étui de protection de la tige de direction 13. De plus, le siège 15 est rabattu tout en recouvrant l'extrémité avant 5 du cadre donnant une forme globalement arrondie à la bicyclette pliée.

Dans une variante de l'invention, la selle 9 forme un moyen de verrouillage comme précédemment mentionné. En effet, la selle 9 peut être réalisée en forme de U pour s'emboîter sur le cadre 2 tout en protégeant le guidon 7, figure 5. Cette selle 9 peut s'encliqueter élastiquement contre une paroi formée par le cadre 2. Pour ce faire, le cadre 2 peut comporter un premier renfoncement 30 et un deuxième renfoncement 31 diamétralement opposés de manière à accueillir respectivement un premier rebord latéral 32 et un deuxième rebord latéral 33 qui sont formés par la selle 9. Ce premier rebord et ce deuxième rebord sont représentés en traits pointillés sur la figure 5 et sont formés par prolongement d'extrémités de la selle. Ce premier rebord et ce deuxième rebord viennent s'encliqueter respectivement sur le premier renfoncement et sur le deuxième renfoncement du cadre 2, figure 5. La forme en U de la selle permet également de diminuer avantageusement le poids de la bicyclette.

Puis, on rabat l'une ou l'autre des deux roues, figure 3. Dans un exemple préféré, on réalise d'abord une translation horizontale de la roue avant 4 par rapport au cadre de manière à décaler parallèlement la monofourche 24 de première portion 22 de la tige de direction, figure 3. Puis on fait pivoter la roue avant autour du troisième axe 19 de manière à rabattre la roue avant 4 en direction du cadre 2. Cette translation horizontale a également pour but de décaler parallèlement par rapport au plan formé par la bicyclette la roue avant 4 de la roue arrière 6.

Puis on fait pivoter la roue arrière 6 en direction du cadre 2 pour insérer partiellement cette roue arrière 6 dans la première troisième rigole 11. La roue arrière 6 est alors placée en regard de la roue avant 4 parallèlement par rapport au plan formé par la bicyclette. De cette manière, la roue avant 4 et la roue arrière 6 sont disposées l'une en regard de l'autre avec leur axe de rotation avant 35 et arrière 36 se confondant, figure 5. La roue avant peut être placée dans une même rigole que la roue arrière comme représenté par de traits en pointillés figure 5. Ou bien, la roue arrière peut être placée dans la deuxième troisième rigole 34.

Dans un mode préféré de l'invention, la bicyclette est soulevée verticalement par rapport à un plan de déplacement de la bicyclette avant de rabattre la roue avant et la roue arrière. Le repliage de la roue avant 4 et de la roue arrière 6 peut s'effectuer en levant la bicyclette verticalement par rapport au plan de déplacement de la bicyclette préférentiellement après avoir décaler la roue avant 4 par rapport à la roue arrière 6.

Pour faciliter le pliage de la bicyclette et du fait de la présence du pédalier de roue relié à la roue arrière, la roue avant est préférentiellement décaler par rapport à la roue arrière. Mais le pliage de la bicyclette peut également être réalisé en décalant la roue arrière par rapport à la roue avant.

Pour faciliter le pliage de la bicyclette et comme précédemment mentionné, on peut bloquer également en position pliée la selle et le guidon en rabattant le garde boue autour de l'axe 21. En position plié, Le garde boue bloque l'articulation 17 et l'articulation 18. Le pliage de la bicyclette est facilité car il n'est pas nécessaire lors du levage de la bicyclette de maintenir avec ses mains le guidon et la selle pliés. Avec l'invention, l'utilisateur peut avec sa première main lever la bicyclette, puis à l'aide de sa deuxième main rabattre éventuellement la roue avant et la roue arrière.

Pour faciliter le pliage de la bicyclette, il peut être prévu de replier la bicyclette à l'aide de ressorts (non représentés) placés entre chacune des roues et le cadre. Ces ressorts faciliteraient la rotation de la roue avant et de la roue arrière autour des axes 19 et 20 respectivement lors du soulèvement de la bicyclette. L'utilisateur n'aurait plus besoin d'utiliser sa deuxième main pour aider au pliage des roues.

Un tel pliage selon l'invention permet d'aboutir à une bicyclette pliée compactée de forme globalement arrondie ou non agressive.

Pour faire tenir la bicyclette pliée en position verticale par rapport au plan de déplacement de la bicyclette, le carénage protégeant la transmission situé sur un côté du plan formé par la bicyclette peut également être contrebalancé par un autre carénage (non représenté) situé sur l'autre côté du plan formé par la bicyclette.

La bicyclette selon l'invention présente également d'autres avantages. Notamment, une telle bicyclette n'est pas un pince doigts. Cette bicyclette peut se plier quasiment en position debout d'un utilisateur. Le pliage de la bicyclette peut s'effectuer proprement sans risque pour l'utilisateur de se salir.

Une telle bicyclette selon l'invention présente une non agressivité vis-à-vis de l'utilisateur et vis- à vis d'un environnement de la bicyclette. On peut prévoir une housse qui n'abîme pas l'environnement de la bicyclette à cause des pédales par exemple. Pour diminuer encore davantage une agressivité éventuelle d'une telle bicyclette selon l'invention, les roues peuvent également être carénées par l'intermédiaire de flasques ou de jantes pleines.

Dans l'invention, on cherche à réaliser une bicyclette pliée présentant une surface la plus lisse possible. On cherche à réaliser une bicyclette pliée la plus compacte possible sans émergence d'obstacles tendant à s'étendre perpendiculairement au plan formé par la bicyclette.

Enfin, on cherche à réaliser un objet compacté sans agressivité.

## Revendications

1. Bicyclette pliable (1) comportant une roue avant (4), une roue arrière (6), un guidon (7) pour diriger la roue avant, un cadre (2), une selle (9), et un mécanisme pour qu'un plan de la roue avant soit parallèle à un plan de la roue arrière et pour que la roue avant soit située en regard de la roue arrière au moment du pliage, le guidon étant rabattable autour d'un premier axe (17) de pliage monté sur une tige de direction du guidon, la bicyclette comportant également un mécanisme de rabattement de la roue avant autour d'un deuxième axe de pliage (19) monté également sur la tige de direction, **caractérisée en ce qu'**elle comporte un mécanisme de translation de la roue avant perpendiculairement à un plan de la bicyclette, le mécanisme de translation étant monté sur ce deuxiéme axe de pliage.

2. Bicyclette selon la revendication 1, **caractérisée en ce que** le cadre comporte une première rigole (10) de forme complémentaire à une forme du guidon, et des moyens d'articulation du guidon pour que le guidon se loge dans la rigole au moment du pliage.

3. Bicyclette selon l'une des revendications 1 à 2, **caractérisée en ce que** le guidon comporte une tige de direction, une première poignée (12) et une deuxième poignée (12.1), la première poignée et la deuxième poignée s'articulant sur la tige de direction pour se rabattre le long de la tige de direction au moment du pliage de la bicyclette.

4. Bicyclette selon l'une des revendications 1 à 3, **caractérisée en ce que** la selle comporte une deuxième rigole (16) de forme complémentaire à une forme du guidon.

5. Bicyclette selon la revendication 4, **caractérisée en ce que** la selle est formée par un siège (16) et par une tige de selle (9), la deuxième rigole étant formée le long du siège et le long de la tige de selle.

6. Bicyclette selon l'une des revendications 1 à 5, **caractérisé en ce que**
- la roue avant de la bicyclette est reliée au guidon par une mono fourche (24) qui est située sur un premier côté du plan formé par la bicyclette,
- la roue arrière est reliée à un pédalier de roue (8) qui est situé sur un deuxième côté du plan formé par la bicyclette.

7. Bicyclette selon l'une des revendications 1 à 6, **caractérisée en ce que** le cadre comporte au moins une troisième rigole (11) de forme complémentaire à une forme d'une partie d'une des deux roues.

8. Bicyclette selon l'une des revendications 1 à 7, **caractérisée en ce qu'**un siège (15) de la selle est rabattu tout en recouvrant une extrémité avant (3) du cadre de manière à donner une forme globalement arrondie à la bicyclette pliée.

9. Bicyclette selon l'une des revendications 1 à 8, **caractérisée en ce qu'**elle comporte un garde boue (29) rabattable.

10. Procédé de pliage d'une bicyclette (1), **caractérisé en ce qu'**il comportant les étapes suivantes
- on rabat un guidon (7) dans une première rigole (10) formée dans un cadre (2), par rotation du guidon autour d'un premier axe de pliage (17) monté sur une tige de direction,
- on rabat une selle (9) contre le cadre pour recouvrir le guidon par une deuxième rigole (16) formée par la selle, par rotation, de la selle autour d'un deuxième axe de pliage (18),
- on déplace une roue avant (4) par translation perpendiculaire à un plan formé par la bicyclette, le long d'un troisième axe de pliage lui aussi monté sur la tige de direction, puis on rabat la roue avant en direction d'une roue arrière (6) par rotation de la roue avant autour de ce troisième axe de pliage (19), et
- on rabat la roue arrière en direction de la roue avant par rotation de la roue arrière autour d'un quatrième axe de pliage (20).

11. Procédé de pliage selon la revendication 10, dans lequel on rabat la roue arrière dans une première troisième rigole (11) formée dans le cadre, et on rabat la roue avant dans une deuxième troisième rigole (34) formée dans le cadre.

12. Procédé de pliage selon l'une des revendications 10 à 11, dans lequel on rabat la roue arrière et la roue avant dans une même troisième rigole formée dans le cadre.

13. Procédé de pliage selon l'une des revendications 10 à 11, dans lequel on rabat la roue arrière et la roue avant respectivement dans une première troisième rigole et une deuxième troisième rigole formées dans le cadre.

14. Procédé de pliage selon l'une des revendications 10 à 13, dans lequel on soulève verticalement la bicyclette par rapport à un plan de déplacement normal de la bicyclette avant de rabattre la roue avant et la roue arrière.

15. Procédé de pliage selon l'une des revendications 10 à 14, dans lequel on rabat un garde-boue (29) par rotation de ce garde-boue autour d'un cinquième axe de pliage (21) situé sur la selle.

16. Procédé de pliage selon l'une des revendications 10 à 15, dans lequel on rabat un siège (15) d'une selle (9) tout en recouvrant une extrémité avant (3) du cadre donnant une forme globalement arrondie à la bicyclette pliée.

## Claims

1. A folding bicycle (1) including a front wheel (4), a rear wheel (6), a handlebar (7) for steering the front wheel, a frame (2), a saddle (9), and a mechanism ensuring that a plane of the front wheel is parallel to a plane of the rear wheel and ensuring that the front wheel is positioned opposite the rear wheel when folding, the handlebar being foldable around a first folding axis (17) mounted onto a steering rod of the handlebar, the bicycle also including a folding mechanism for folding the front wheel around a second folding axis (19) also mounted onto the steering rod, **characterised in that** it includes a mechanism for translating the front wheel perpendicularly to a plane of the bicycle, the translation mechanism being mounted onto this second folding axis.

2. A bicycle according to claim 1, **characterised in that** the frame includes a first channel (10) in a shape complementary to a shape of the handlebar, and hinge means for the handlebar to ensure that the handlebar rests in the channel when folding.

3. A bicycle according to one of claims 1 to 2, **characterised in that** the handlebar includes a steering rod, a first grip (12) and a second grip (12.1), the first grip and the second grip being hinged on the steering rod in order to be folded away along the steering rod when folding the bicycle.

4. A bicycle according to one of claims 1 to 3, **characterised in that** the saddle includes a second channel (16) in a shape complementary to a shape of the handlebar.

5. A bicycle according to claim 4, **characterised in that** the saddle is made up of a seat (15) and a seatpost (9), the second channel being formed along the length of the seat and along the length of the seatpost.

6. A bicycle according to one of claims 1 to 5, **characterised in that**
- the front wheel of the bicycle is connected to the handlebar by a single fork (24) which is positioned on a first side of the plane formed by the bicycle,
- the rear wheel is connected to a wheel crankset (8) which is positioned on a second side of the plane formed by the bicycle.

7. A bicycle according to one of claims 1 to 6, **characterised in that** the frame includes at least a third channel (11) in a shape complementary to a shape of a part of one of the two wheels.

8. A bicycle according to one of claims 1 to 7, **characterised in that** a seat (15) of the saddle is folded while covering a front edge (3) of the frame in such a way as to give the folded bicycle an overall round shape.

9. A bicycle according to one of claims 1 to 8, **characterised in that** it includes a foldable mudguard (29).

10. A method of folding a bicycle (1), including the following steps
- a handlebar (7) is folded away into a first channel (10) formed in a frame (2), by rotating the handlebar around a first folding axis (17) mounted onto a steering rod,
- a saddle (9) is folded away against the frame to cover the handlebar by a second channel (16) formed by the saddle, by rotating the saddle around a second folding axis (18),
- a front wheel (4) is moved by translation perpendicular to a plane formed by the bicycle, along a third folding axis which is also mounted onto the steering rod, then the front wheel is folded away in the direction of a rear wheel (6) by rotating the front wheel around this third folding axis (19); and
- the rear wheel is folded away in the direction of the front wheel by rotating the rear wheel around a fourth folding axis (20).

11. A folding method according to claim 10, wherein the rear wheel is folded away into a first third channel (11) formed within the frame, and the front wheel is folded away into a second third channel (34) formed within the frame.

12. A folding method according to one of claims 10 to 11, wherein the rear wheel and the front wheel are folded away into the same third channel formed within the frame.

13. A folding method according to one of claims 10 to 11, wherein the rear wheel and the front wheel are folded away respectively into a first third channel and a second third channel formed within the frame.

14. A folding method according to one of claims 10 to 13, wherein the bicycle is lifted vertically with respect to a normal plane of movement of the bicycle before folding away the front wheel and the rear wheel.

15. A folding method according to one of claims 10 to 14, wherein a mudguard (29) is folded away by rotating this mudguard around a fifth folding axis (21) positioned on the saddle.

16. A folding method according to one of claims 10 to 15, wherein a seat (15) of a saddle (9) is folded away while covering a front edge (3) of the frame, giving the folded bicycle an overall round shape.

## Patentansprüche

1. Klappfahrrad (1) mit einem Vorderrad (4), einem Hinterrad (6), einem Lenker (7) zum Steuern des Vorderrades, einem Rahmen (2), einem Sattel (9), und einem Mechanismus, damit eine Ebene des Vorderrades parallel zu einer Ebene des Hinterrades steht und damit das Vorderrad beim Zusammenklappen gegenüber dem Hinterrad steht, wobei der Lenker um eine erste Klappachse (17) geklappt werden kann, die auf einer Lenkstange des Lenkers montiert ist, und das Fahrrad auch einen Klappmechanismus für das Vorderrad um eine zweite Klappachse (19) enthält, die ebenfalls auf der Lenkstange montiert ist, **dadurch gekennzeichnet, dass** es einen Translationsmechanismus für das Vorderrad normal zu einer Ebene des Fahrrades enthält, und der Translationsmechanismus auf dieser zweiten Klappachse montiert ist.

2. Fahrrad nach Anspruch 1, **dadurch gekennzeichnet, dass** der Rahmen eine erste Rinne (10) in einer ergänzenden Form zu jener des Lenkers aufweist, sowie Gelenke des Lenkers, damit sich der Lenker beim Zusammenklappen in die Rinne einfügt.

3. Fahrrad nach einem der Ansprüche 1 bis 2, **dadurch gekennzeichnet, dass** der Lenker eine Lenkstange, einen ersten Handgriff (12) und einen zweiten Handgriff (12.1) aufweist, wobei der erste und der zweite Handgriff so auf der Lenkstange angeordnet sind, dass sie sich beim Zusammenklappen des Fahrrades an die Lenkstange anlegen.

4. Fahrrad nach einem der Ansprüche 1 bis 3, **dadurch gekennzeichnet, dass** der Sattel eine zweite Rinne (16) aufweist, die eine ergänzende Form zu jener des Lenkers aufweist.

5. Fahrrad nach Anspruch 4, **dadurch gekennzeichnet, dass** der Sattel durch einen Sitz (15) und eine Sattelstange (9) gebildet wird, wobei die zweite Rinne entlang des Sitzes und entlang der Sattelstange ausgebildet ist.

6. Fahrrad nach einem der Ansprüche 1 bis 5, **dadurch gekennzeichnet, dass**
- das Vorderrad des Fahrrades über eine Mono-Gabel (24) mit dem Lenker verbunden ist, die sich auf einer ersten Seite der Ebene befindet, die vom Fahrrad gebildet wird,
- das Hinterrad mit einem Rad-Tretlager (8) verbunden ist, das sich auf einer zweiten Seite der Ebene befindet, die vom Fahrrad gebildet wird.

7. Fahrrad nach einem der Ansprüche 1 bis 6, **dadurch gekennzeichnet, dass** der Rahmen zumindest eine dritte Rinne (11) enthält, die eine ergänzende Form zu jener eines Teils eines der beiden Räder aufweist.

8. Fahrrad nach einem der Ansprüche 1 bis 7, **dadurch gekennzeichnet, dass** ein Sitz (15) des Sattels eingeklappt wird und dabei ein vorderes Ende (3) des Rahmens so abdeckt, dass das eingeklappte Fahrrad eine allgemein abgerundete Form erhält.

9. Fahrrad nach einem der Ansprüche 1 bis 8, **dadurch gekennzeichnet, dass** es ein klappbares Schutzblech enthält.

10. Verfahren zum Zusammenklappen eines Fahrrades (1), **dadurch gekennzeichnet, dass** es die folgenden Schritte enthält
- man klappt einen Lenker (7) in eine erste Rinne (10), die in einen Rahmen (2) eingelassen ist, indem man den Lenker um eine erste Klappachse (17) dreht, die auf einer Lenkstange montiert ist.
- man klappt einen Sattel (9) gegen den Rahmen, um den Lenker durch eine zweite Rinne (16) abzudecken, die vom Sattel gebildet wird, indem man den Sattel um eine zweite Klappachse (18) dreht.
- man verschiebt ein Vorderrad (4) durch eine Translation normal zu einer Ebene, die vom Fahrrad gebildet wird, entlang einer dritten Klappachse, die ebenfalls auf der Lenkstange montiert ist, und klappt dann das Vorderrad in Richtung eines Hinterrades (6), indem man das Vorderrad um diese dritte Klappachse (19) dreht, und
- man klappt das Hinterrad in Richtung des Vorderrades, indem man das Hinterrad um die vierte Klappachse (20) dreht.

11. Klappverfahren nach Anspruch 10, bei dem man das Hinterrad in eine erste dritte Rinne (11) klappt, die in den Rahmen eingelassen ist, und man das Vorderrad in eine zweite dritte Rinne (34) klappt, die in den Rahmen eingelassen ist.

12. Klappverfahren nach einem der Ansprüche 10 bis 11, bei dem man das Hinterrad und das Vorderrad in eine selbe dritte Rinne klappt, die in den Rahmen eingelassen ist.

13. Klappverfahren nach einem der Ansprüche 10 bis 11, bei dem man das Hinterrad und das Vorderrad jeweils in eine erste dritte Rinne und eine zweite dritte Rinne klappt, die in den Rahmen eingelassen sind.

14. Klappverfahren nach einem der Ansprüche 10 bis 13, bei dem man das Fahrrad senkrecht in Bezug auf eine normale Bewegungsebene des Fahrrades anhebt und dann das Vorderrad und das Hinterrad einklappt.

15. Klappverfahren nach einem der Ansprüche 10 bis 14, bei dem man ein Schutzblech (29) durch das Verdrehen dieses Schutzblechs um eine fünfte Klappachse (21) einklappt, die sich auf dem Sattel befindet.

16. Klappverfahren nach einem der Ansprüche 10 bis 15, bei dem man einen Sitz (15) eines Sattels (9) einklappt und dabei ein vorderes Ende (3) des Rahmens abdeckt, wodurch das eingeklappte Fahrrad eine allgemein abgerundete Form verhält
